# EUROPEAN PATENT APPLICATION

(11) **EP 4 015 804 A1**
(43) Date of publication of application: **22.06.2022**
(21) Application number: 21212971.2
(22) Date of filing: 07.12.2021
(51) Int. Cl.: F02D 9/18

(54) **THROTTLING ELEMENT FOR LARGE GAS ENGINES**

(30) Priority: 18.12.2020 GB 202020088
(71) Applicant: Caterpillar Energy Solutions GmbH, 68167 Mannheim (DE)
(72) Inventor: SNUIS, Hans-Bernhard, 68167 Mannheim (DE)
(74) Representative: Nordmeyer, Philipp Werner

(57) **Abstract**

The present invention pertains to a throttling element for a combustion engine providing an improved air flow and gas flow control as well as a corresponding combustion engine comprising such throttling element and a system for controlling an air flow using such throttling element. Accordingly, a throttling element for a combustion engine is suggested, comprising an expansion member (12) configured to increase its radial extension by increasing the amount of a fluid in an inner portion of the expansion member (12) and to decrease its radial extension by decreasing the amount of fluid from the inner portion, wherein the expansion member (12) is configured to limit a cross-section of an air flow (22) of an inlet air channel (10) of the combustion engine by its radial extension in the assembled state of the throttling element.

## Description

### Technical Field

The present invention pertains to a throttling element for a combustion engine providing an improved air flow and gas flow control as well as a corresponding combustion engine comprising such throttling element and a system for controlling an air flow using such throttling element.

### Technological Background

In combustion engines, an air intake valve or throttle valve is generally used as a starting device in order to provide a sufficient flow of a combustible fluid, e.g. a gas or gas mixture. The valve is configured to limit the air flow and provide a necessary pressure downstream of such valve to ensure a sufficient flow of the combustible fluid by means of suction or under pressure. The mechanical components of such valves, e.g. flaps and support structures, are generally heavy and constitute a moment of inertia that requires corresponding large driving or actuating forces.

As a consequence, the required actuator, e.g. in the form of an electric motor, is also generally heavy. These components are hence not only expensive, but also increase valve actuation times. In particular for combustion engines configured for heavy working loads, the weight, associated costs, and actuation times are considerable. Furthermore, such valves may not provide optimal flow and/or pressure conditions for different operating modes of a combustion engine.

Accordingly, there is a need to improve current throttling elements for combustion engines and to at least partially abrogate the above unfavorable conditions.

### Summary of the Invention

Starting from the prior art, it is an objective to provide an improved throttling element for a combustion engine. In particular, it may be an objective to provide a throttling element which facilitates actuation and reduces actuation times of the throttling element, preferably also providing an adjustable throttling for a range of operational conditions of the combustion engine.

This objective is solved by means of a throttling element with the features of claim 1, a combustion engine with the features of claim 15 and a system with the features of claim 16. Preferred embodiments are set forth in the present specification, the Figures as well as the dependent claims.

Accordingly, a throttling element for a combustion engine, preferably a gas engine, is suggested, which comprises an expansion member configured to increase its radial extension by increasing the amount of a fluid in an inner portion of the expansion member and to decrease its radial extension by decreasing the amount of fluid from the inner portion, wherein the expansion member is configured to limit a cross-section of an air flow of an inlet air channel of the combustion engine by its radial extension in the assembled state of the throttling element.

Furthermore, a combustion engine, preferably a gas engine, comprising an inlet air channel and a corresponding throttling element is suggested.

Furthermore, a system for controlling an air flow in a combustion engine is suggested, comprising an inlet air channel, a valve that is connectable to a pressurized gas source, and a corresponding throttling element, which is arranged in the inlet air channel, wherein the expansion member may be fluidly coupled to the pressurized gas source via the valve.

### Brief Description of the Drawings

The present disclosure will be more readily appreciated by reference to the following detailed description when being considered in connection with the accompanying drawings in which:
Figure 1 shows a throttling element in a longitudinal section in an unexpanded state;
Figure 2 shows the throttling element according to Figure 1 in an expanded state;
Figure 3 shows the throttling element according to Figure 1 in a cross-sectional view;
Figure 4 shows the throttling element according to Figure 2 in a cross-sectional view; and
Figure 5 shows a longitudinal section of a throttling element according to another embodiment under different operating states of a combustion engine.

### Detailed Description of Preferred Embodiments

In the following, the invention will be explained in more detail with reference to the accompanying figures. In the Figures, like elements are denoted by identical reference numerals and repeated description thereof may be omitted in order to avoid redundancies.

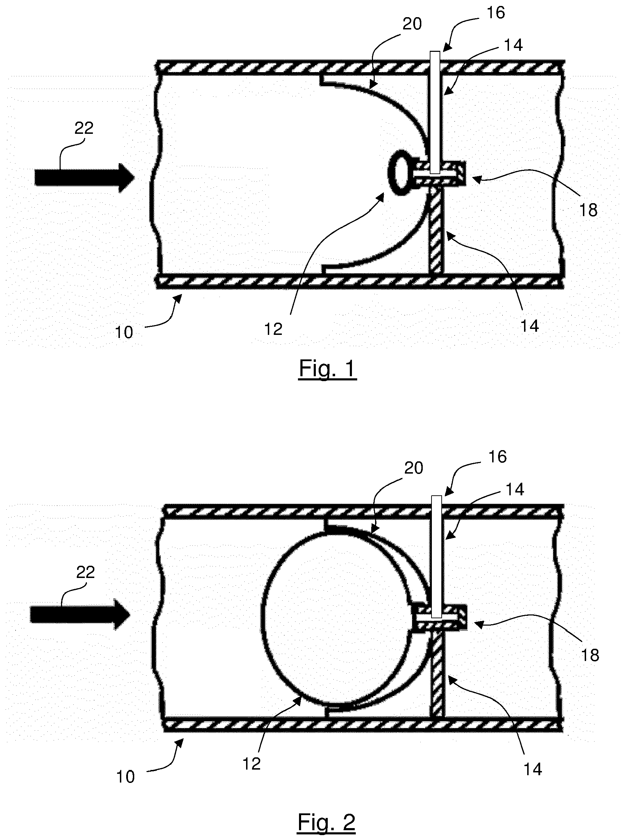

In Figure 1 a throttling element is shown in an assembled state within an inlet air channel 10. The inlet air channel 10 comprises a wall which defines a longitudinal axis and which essentially encloses the throttling element or, according to the present example, at least the expansion member 12 of the throttling element. Although the expansion member 12 may have a variety of configurations, the expansion member 12 is preferably formed as an elastic balloon.

The throttling element is connected to the (inner) wall of the inlet air channel 10 by means of support elements 14. As an example, two support elements 14 may be provided which extend along a radial axis and contact the wall at opposing radial ends of the inlet air channel 10. The support elements 14 may e.g. be formed as resilient members so as to provide a press fit or interference fit and may optionally be retained by protrusions (not shown) at the inner wall to facilitate the assembly of the throttling element, i.e. to predefine the connection point in an axial direction of the inlet air channel 10. However, other connections may be provided. For example, fixation means may be provided that engage at least one of the support elements 14 from the exterior of the inlet air channel via a through hole.

The support elements 14 provide a suspension for the expansion member 12 and may be dimensioned to provide a predefined position for the expansion member 12 within the inlet air channel 10. According to the exemplary embodiment, the expansion member 12 is arranged at an essentially central position of the inlet air channel 10, both in the longitudinal section and in a cross-section of the inlet air channel 10, such that the expansion member 12 is essentially concentric with the inlet air channel 10. Thereby, a homogeneous radial extension and hence a homogeneous cross-sectional air flow limitation may be provided, also for expansion states between the unexpanded state and a predefined (fully) expanded state.

One of the support elements 14 comprises an integrated conduit 16, which extends through the wall of the inlet air channel 10 and the support element 14, as shown for the top support element 14 depicted in Figure 1. The conduit 16 may be fluidically coupled to a pressurized gas source, e.g. air, via a valve (not shown), so as to provide a fluid to an inner portion of the expansion member 12 to adjust the radial extension of the expansion member 12. Such fluid communication between the conduit 16 and the expansion member 12 is provided by means of a coupling point 18, which provides that the support elements 14 are connected to each other and that the expansion member 12 is coupled to the support elements 14. As shown, the coupling point 18 may comprise an inner cavity, which is in fluid communication with an open end of the expansion member 12 and an open end of the conduit 16. Accordingly, fluid, e.g. pressurized gas, may be provided to the expansion member 12 and be removed or discharged from the expansion member 12 via the coupling point 18 and the conduit 16.

By increasing the amount of fluid within the expansion member 12, i.e. within the inner portion of the expansion member 12, the radial extension of the expansion member 12 is increased, such that the expansion member 12 limits a cross-sectional air flow within the inlet air channel, as indicated by the air flow directional arrow 22. The extension of the expansion member 12 is limited in the radial and axial direction by means of guiding members 20, which extend radially and axially from the coupling point 18 to the wall of the inlet air channel 10 in an upstream direction.

A limitation of the cross-sectional air flow 22 is shown in Figure 2, wherein a predefined amount of pressurized gas is provided to the expansion member 12 so as to achieve a predefined expansion state of the expansion member 12. As shown in Figure 2, the parabolic shape of two connected guiding members 20 provides that a round or ellipsoid expansion member 12 may be accommodated and/or biased essentially without exerting a punctual compressive force on the expansion member 12. By means of the limitation of the cross-sectional air flow 22, an under pressure downstream of the throttling element may be achieved, which facilitates a downstream flow of a combustible fluid, e.g. during start-up of a combustion engine, towards a fuel mixer or gas mixer arranged further downstream.

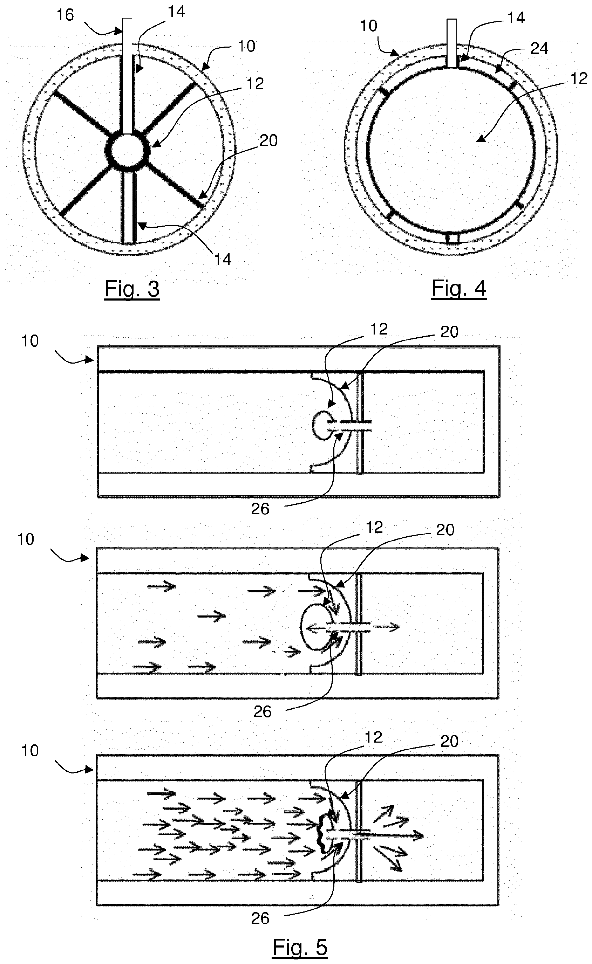

An advantageous influence on the cross-sectional air flow 22 is furthermore depicted in Figures 3 and 4, which respectively show the expansion member 12 in an unexpanded and expanded state.

Accordingly, in the unexpanded state depicted in Figure 3, an air flow through the inlet air channel 10 is not significantly affected by the throttling element due to the small size of the expansion member 12 and the configuration of the support elements 14 and guiding members 20. As shown in Figures 3 and 4, the present embodiment includes four guiding members 20, which are arranged so as to contact the inner wall of the inlet air channel 10 at equidistant spacing in a circumferential direction. The guiding members 20 hence form a frame, wherein two guiding members 20 are arranged at opposing radial ends of the inlet air channel 10. Thereby, accommodating the expansion member 12 may be facilitated and be provided in a more evenly distributed manner. However, the embodiment is not limited to the number and arrangement of the guiding members 20. For example, three guiding members 20 may be provided, which are optionally not provided at equidistant circumferential spacing and/or extend freely from the coupling point 18, i.e. do not contact the inner wall of the inlet air channel 10.

In Figure 4, the expansion member 12 is expanded to the predefined expanded state. Due to the shape of the guiding members (cf. Figures 1 and 2), a radial extension of the expansion member 12 is limited, such that a gap 24 is defined between the expansion member 12 and the inner wall of the inlet air channel 10. Said gap 26 and cross-sectional flow limitation are defined so as to provide an under pressure downstream of the throttling element while maintaining an air flow within the inlet air channel necessary for a combustible mixture. In other words, the under pressure may result e.g. in a gas flow that is sufficient during start-up of the combustion engine while the gap 24 still provides sufficient air for operational functionality of the combustion engine. After start-up, the radial extension of the expansion member 12 may again be reduced and/or the expansion member 12 may be brought into its unexpanded state, e.g. during normal operation, when sufficient flows and pressures have been established and/or other boundary or operational conditions are present.

Another embodiment of the throttling element without a conduit and a pressurized gas source is depicted in Figure 5. The expansion member 12 is configured as an essentially self-inflatable expansion member 12, e.g. in the form of a balloon. The expansion member 12 is also arranged at a central position within the inlet air channel 10 and is connected to support elements as well as guiding members 20. Instead of a conduit to provide a fluid, e.g. a pressurized gas, to the inner portion of the expansion member 12, the throttling element according to this embodiment comprises an air intake element 26, which is configured to receive an air flow from the inlet air channel 10 and direct said air flow to an opening of the inner portion, i.e. is fluidically connected therewith.

As shown in the top panel of Figure 5, if no air flow is present within the inlet air channel 10, the expansion member 12 is in an unexpanded state. Upon start of the combustion engine, an air flow may be established, which is depicted in the middle panel with the arrows. It is shown that the air flow is received in part by the air intake element 26 and is directed to the inner portion of the expansion member 12. Accordingly, the expansion member 12 expands and a radial extension of the expansion member 12 is increased. Due to the increase in the radial extension, the cross-sectional air flow within the inlet air channel is reduced, such that an under pressure is provided downstream of the air intake element 26. This on its end increases the flow of a combustible fluid downstream of the throttling element and hence the operational functionality of the combustion engine, such that the under pressure may be further increased.

After achieving a predefined expansion state and a corresponding under pressure, the forces acting on the expansion member 12 result in a compression of the expansion member 12, such that the air is discharged from the inner portion of the expansion member 12 and the expansion member is gradually returned in its original, unexpanded state, as shown in the bottom panel of Figure 5.

The embodiment hence requires no particular actuation or control features to adjust the radial extension and limitation of the cross-sectional air flow and may hence operate in an independent manner. The configuration of the expansion member 12 and dimensioning of the other throttling element components is only dependent on the operational boundary conditions, such that the reduction in radial extension is only provided, if a predefined under pressure or flow has been established in the inlet air channel 10, which corresponds to a predefined operational state of the combustion engine, e.g. normal operation.

It will be obvious for a person skilled in the art that these embodiments and items only depict examples of a plurality of possibilities. Hence, the embodiments shown here should not be understood to form a limitation of these features and configurations. Any possible combination and configuration of the described features can be chosen according to the scope of the invention.

This is in particular the case with respect to the following optional features which may be combined with some or all embodiments, items and/or features mentioned before in any technically feasible combination.

A throttling element for a combustion engine, preferably a gas engine, is provided.

Such throttling element may comprise an expansion member configured to increase its radial extension by increasing the amount of a fluid in an inner portion of the expansion member and to decrease its radial extension by decreasing the amount of fluid from the inner portion, wherein the expansion member is configured to limit a cross-section of an air flow of an inlet air channel of the combustion engine by its radial extension in the assembled state of the throttling element.

The expansion member may hence comprise an inner portion that is formed as an inner cavity and which is surrounded by an essentially continuous and preferably homogeneous wall. By varying the amount of fluid within the expansion member, a volume of the expansion member may increase, wherein the wall of the expansion member may be deformable and be provided e.g. in a collapsible and/or foldable manner or be formed of an essentially resilient and/or elastic material.

Preferably, the expansion member is configured to provide a homogeneous expansion both in the axial and the radial direction, but it may also be provided that the expansion, and hence extension, is more dominant in the radial direction. Such expansion potential may be defined e.g. by the configuration or thickness of the wall and/or the shape of the expansion member. Most preferably, the expansion member is formed as a balloon having a single opening to receive and conduct the fluid.

The expansion member may be formed e.g. of an elastic and stretchable material, such as an elastomer or rubber or may be based on a polymer such as polyethylene or similar materials, which enable an expansion so as to limit the air flow within an air inlet channel of a combustion engine without significantly blocking said airflow in the unexpanded state. In other words, the material can be chosen such that an extension is enabled starting e.g. essentially from a center region of the inlet air channel to an inner wall of the inlet air channel while being sufficiently robust to allow a rapid expansion under a variety of ambient and operating conditions.

The expansion member provides that by means of changing the amount of fluid adjustments to the air flow within the inlet air channel are facilitated and may be performed significantly faster compared with commonly used actuators. No heavy weight mechanical valve or throttling elements or corresponding actuators are required. Instead, the air flow limitation may be simply provided by increasing the amount of fluid in the expansion member, such that large and heavy weight components may be omitted. Thereby, the costs for the throttling element may be reduced and a throttling element is provided that may be more easily replaced, either on overhaul or as replacement prior to operation of the combustion engine.

Furthermore, this also provides that the time for e.g. closing the throttling element may be considerably reduced, in particular for large gas engines. Accordingly, operating times may be increased and load-dependent adjustments may be performed faster and in a reliable manner. The limitation of the air flow within the inlet air channel may be advantageous to establish or increase an under pressure downstream of the throttling element, which may accordingly increase a suction pressure for a combustible mixture or gas. In other words, by adjusting the radial extension (relative to the axial extension of the inlet air channel) of the expansion member, the amount of combustible fluid flowing downstream of the throttling element, e.g. toward a mixer or gas mixer being in fluid communication with the inlet air channel and the flow of combustible fluid, may be directly controlled and adjusted by means of increasing or decreasing the amount of fluid in the expansion member.

Preferably, the expansion member is configured to be fully arranged within the inlet air channel in the assembled state of the throttling element. The expansion member may e.g. be held by means of a fixture within the inlet air channel. The arrangement within the inlet air channel may have the advantage that e.g. an increase in the amount of fluid within the expansion member directly affects the radial extension and the limitation of the cross-section of the air flow. Furthermore, this may reduce the amount of material and/or the dimensioning of the expansion member compared with an arrangement providing an extension of the expansion member e.g. through an inner wall of the inlet air channel. By the same token, this reduces the amount of potential friction or wear, since the expansion member may extend in an essentially unobstructed manner.

The limitation of the cross-section of the air flow is to be understood that the air flowing into the inlet air channel in an essentially axial direction is impaired or blocked at least in part whereas the cross-section of the inlet air channel is not affected. In other words, the inlet air channel and the dimensioning thereof is generally considered to be fixed and only the cross-sectional flow area of the air flowing through the inlet air channel is affected by the radial extension of the expansion member.

To facilitate the arrangement and assembly of the throttling element, the throttling element may comprise at least one support element connected to and configured to support the expansion member, wherein the support element is furthermore connectable to an inner wall of the inlet air channel. Hence one or more rods, pins, hooks, biasing members, protrusions, or clamping elements, for example, may be provided, which may be connected to a corresponding feature provided in or at the inner wall of the inlet air channel. For example, a single rod may be provided, which may be attached to the inner wall of the inlet air channel or penetrate the inlet air channel for coupling with an exterior fixation element, so as to provide a suspension of the expansion member on one radial end of the inner wall. Instead of such a rod, however, one or more protrusions may be provided that engage corresponding recesses or cut-outs. The one or more support elements may also be configured to provide a resilient support so as to enable a force-fitting or interference fitting of the expansion member within the inlet air channel. Alternatively, at least one support element may provide a form-fitting engagement with a corresponding feature in/on the inner wall, e.g., in a Poka-Yoke manner.

Although a single support element may be sufficient and may be advantageous e.g. for replacement and to reduce the number of mechanical components for the throttling element, the throttling element preferably comprises at least two support elements, wherein each of said support elements is furthermore configured to contact the wall of the inlet air channel at spaced-apart positions and/or wherein the contacting points of the support elements are at equidistant circumferential spacing in a cross-section of the wall in the assembled state of the throttling element.

By means of multiple support elements, the structural stability of the throttling element may be increased and a level of redundancy is provided to increase the safety and functionality of operation of the combustion engine. Furthermore, this may be advantageous, when the amount of fluid within the expansion member is rapidly adjusted, i.e. to avoid oscillations and vibrations. For example, two support elements may be provided which are arranged so as to be connected to the inner wall of the inlet air channel at opposing radial ends.

However, the arrangement is not limiting and it may also be provided that e.g. three support elements are provided at equidistant spacing, i.e. having a spacing of about one third of the circumference of the inlet air channel between each pair of support elements. Equidistant spacing may facilitate assembly of the throttling element in the inlet air channel, since installment may be provided in an omnidirectional manner with regard to the circumference of the inlet air channel.

On the other hand, e.g. three support elements may also be arranged e.g. in a Y-shape, covering e.g. two (similar) larger circumferential portions (e.g. two pairs having a respective spacing of about two fifths of the circumference) and one corresponding smaller circumferential portion (e.g. one pair having a respective spacing of about one fifth of the circumference). Such arrangement may e.g. provide that sufficient support is provided, also in the circumferential direction, while the attachment to the inner wall is concentrated in essentially two regions, thereby potentially improving the structural stability of the inlet air channel and/or improving the air flow in the unexpanded state.

The arrangement of the expansion member within the inlet air channel already has several advantages, as outlined in the above. Furthermore, the expansion member may be arranged at a central position of and/or concentric with the inlet air channel in a cross-section of the inlet air channel in the assembled state of the throttling element. Thereby, a homogeneous expansion in all radial directions may be ensured and the required radial extension may be further reduced, such that the pressure caused by the fluid within the expansion member may be accordingly reduced. Thereby, tensional and/or compressive forces on e.g. a wall of the expansion member may be reduced, which is particularly advantageous in case of an elastic expansion member such as e.g. a balloon. This may also reduce wear and hence increase robustness of the expansion member. Furthermore, the homogeneous expansion starting from the center of the inlet air channel ensures that an even faster adjustment of the cross-sectional flow limitation of the air flow may be provided.

Preferably, the expansion member is configured to provide a continuous and/or linear extension at least in the radial direction for every predefined amount of fluid. Thereby, a more predictable, e.g. linear correlation, between the amount of fluid provided to the expansion member and the air flow limitation and hence downstream pressure may be provided.

In order to provide further support for the expansion member and/or to bias the expansion member in a particular direction, the throttling element may further comprise an expansion member guiding frame having at least two guiding members, each guiding member being coupled to the expansion member and extending in a radial and axial direction from a coupling point between the expansion member and the guiding member.

The coupling point may e.g. coincide with a coupling or attachment point of the expansion member with one or more support elements or may have an offset, radially and/or axially, with regard to the expansion member. The guiding members may e.g. be formed as struts that extend towards the inner wall of the inlet air channel and may either contact the inner wall or extend freely from the coupling point. The contact may e.g. be provided by means of a radially outward exerting force, wherein the guiding members are coupled in a pivoting manner to the coupling point and/or are formed as resilient guiding members. Such configuration may be advantageous to accommodate for a variety of inlet air channel diameters and may facilitate the assembly, e.g. insertion, of the throttling element into the inlet air channel.

The guiding members may hence form a biasing mechanism so as to bias the expansion member into a predefined direction and/or to limit the extension of the expansion member in a radial and axial direction. This has the advantage that the control of the expansion of the expansion member is improved and predefined boundary conditions may be provided during operation, e.g. when the expansion member is in a predefined or fully expanded state. Furthermore, this avoids that the expansion member may interfere with other components and/or flow conditions of the inlet air channel.

Preferably, the guiding members are arranged at equidistant circumferential spacing in a cross-section of the throttling element. This not only ensures that the expansion member is more evenly supported, but may also provide that no particular orientation of the guiding members may be necessary due to an essentially symmetric (cross-sectional) configuration. The guiding members may be separated from each other or may be connected to each other by means of frame elements extending in an essentially circumferential direction, so as to form a web or mesh-like structure.

Although the guiding members are not limited with regard to a particular shape, the shape is preferably predefined so as to facilitate the support and biasing of the expansion member. Accordingly, at least two of the guiding members may define a parabolic shape or U-shape in a longitudinal section of the throttling element. This may be particularly advantageous for expansion members having an essentially rounded, ellipsoid, or round shape, such that the guiding members may be formed to accommodate the expansion member, preferably without exerting a punctual compressive force on the expansion member. The preferred shape may furthermore provide that the guiding members extend gradually in the radial and axial direction, such that no edges or steps are provided, thereby not only providing improved flow conditions in the unexpanded state, but also avoid sharp contacts in the expanded state of the expansion member.

As described above, the limitation of the cross-sectional air flow may have the advantage that a downstream under pressure may be provided, which ensures that a sufficient flow of a combustible mixture or fuel is enabled, e.g. via the inlet air channel or downstream thereof, which is particularly advantageous upon starting a large combustion or gas engine. The throttling element may hence provide a jump-start mechanism that is either activated prior to start-up or upon start-up of a combustion engine.

Also, a predefined air flow may be required, which may depend on the operational mode. Therefore, the guiding members are preferably arranged to surround at least a portion of the expansion member having the largest radial extension in a predefined expanded state of the expansion member, wherein the guiding members define a predefined gap between said portion of the expansion member and the wall of the inlet air channel in the assembled state of the throttling element.

Such gap may hence correspond to a remaining predefined air flow through or along the throttling element, i.e. along the expansion member, which may correlate linearly to the under pressure provided downstream of the throttling element. Accordingly, both a flow of the combustible fluid and an air flow may be predefined in the expanded state of the expansion member for a particular operation mode of the combustion engine, e.g. for particular operational and/or ambient boundary conditions.

For example, the gap may correspond to an air flow that is necessary to maintain operational functionality during start-up of a large gas engine while at the same time ensuring that a sufficient gas flow, which is dependent on a suction or under pressure, is provided. In addition, the expansion member and the guiding members may be arranged and dimensioned such that the expansion member closes the gap, if the expansion member is expanded beyond the predefined expanded state.

This may be particularly advantageous in situations, wherein an essentially full closure of the inlet air channel is desired, e.g. in the case of an emergency situation, wherein operation of the combustion engine is to be interrupted or stopped. The dimensioning and arrangement may hence be provided, such that a gap is defined, which is essentially closed and essentially no air flow is provided within the inlet air channel, thereby preventing further combustion of the combustible fluid. The expansion of the expansion member beyond the predefined state may be effected by providing an additional predefined amount of the fluid into the inner portion of the expansion member.

The guiding members preferably extend axially towards the inlet portion of the inlet air channel. Although an axial extension towards a downstream end of the inlet air channel is also possible, the preferred orientation may provide that the expansion member does not protrude into the inlet air channel in an uncontrolled manner and/or is sufficiently retained in place even in case of a (partial) loosening of one or more components of the throttling element. Accordingly, it may be prevented that components of the throttling element inadvertently interfere with other components of the combustion engine that are e.g. arranged in fluid communication with the inlet air channel.

The fluid is preferably a gas, e.g. air or an inert gas. Preferably, the gas is provided in a pressurized manner. This provides that rapid adjustments of the radial extension of the expansion member may be performed. Alternatively, or in addition, the expansion member may be formed of an elastic material, such as an elastomer-based material. This may also provide that the responsiveness of the expansion member is improved and adjustments of the radial extension may be facilitated. Most preferably, the expansion member is formed of an elastic material and the fluid is provided as a pressurized gas, preferably pressurized air. Thereby, a synergistic improvement with regard to the responsiveness may be provided while at the same time a throttling element may be provided that is low in manufacturing costs and which is less laborious to manufacture.

The fluid may be provided to the expansion member in a variety of ways. In one embodiment, the throttling element comprises or is coupleable to a conduit, which is in fluid communication with the expansion member and is configured for conducting a fluid to and from the expansion member so as to define the amount of fluid in the inner portion of the expansion member. Preferably, the conduit is arranged so as to extend radially inward from the wall of the inlet air channel in the assembled state of the throttling element. Alternatively, or in addition, the conduit may be configured to form a support element for the expansion member. The conduit may e.g. also be integrated or aligned along a support element of the expansion member. In this manner, the number of components of the throttling element potentially obstructing or impairing the air flow within the inlet air channel in the unexpanded state of the expansion member is reduced. The conduit may have one end that opens into or is directly connected/connectable to the inner portion of the expansion. The other end of the conduit may be coupleable to a valve to provide and discharge or remove the fluid to/from the inner portion of the expansion member, wherein said valve is preferably coupled to a pressurized gas source.

According to another embodiment, the expansion member may comprise an air intake element configured to receive a portion of the air flow, wherein the expansion member is configured so as to increase the amount of the fluid in the inner portion of the expansion member via the air intake element, when the air flow and/or a pressure acting on the expansion member is below a predetermined threshold, and to decrease the amount of the fluid in the inner portion of the expansion member via the air intake element, when the air flow and/or the pressure acting on the expansion member exceeds the predetermined threshold.

In such embodiment, the expansion member may be configured to be essentially self-inflatable and deflatable based on predefined operating and boundary conditions, e.g. with regard to required pressures and air flow rates. For example, the expansion member may be configured such that, upon start-up of a particular combustion engine, an increase in air flow within the inlet air channel is provided, which accordingly increases the amount of air provided to the air intake element of the throttling element. Accordingly, the increase in air flow results in an increase of the amount of a fluid, in the present example air, in the inner portion of the expansion member and hence a corresponding increase in the radial extension of the expansion member. Thereby, a limitation of the cross-sectional air flow within the inlet air channel is provided. At the start-up, a suction pressure downstream of the throttling element may be insufficient to establish a necessary downstream flow of a combustible fluid (e.g. gas) required for a combustible mixture of the combustion engine. Due to the limitation of the cross-sectional air flow, an under pressure is however provided resulting in an improved flow of the combustible fluid.

The operation of the combustion engine and limitation of the cross-sectional air flow may result in a further increase of the under pressure or flow within the inlet air channel downstream of the throttling element, such that a corresponding force is exerted onto the expansion member. When predefined boundary limits are met, e.g. particular under pressures and/or flow rates are achieved within the inlet air channel, the force acting upon the expansion member causes the air to be removed from the inner portion via the air intake, such that the radial extension of the expansion member is accordingly reduced and the expansion member is returned into its original unexpanded state.

In other words, the expansion member may readily be expanded to a predefined expansion state upon and directly following the start-up of the combustion engine while an unexpanded state may be again achieved due to resulting forces acting on the expansion member during normal operation. Thereby, the configuration of the expansion member may be adapted to the particular combustion engine and to predefined boundary or operational conditions so as to accordingly provide the desired expansion states.

Furthermore, a combustion engine, preferably a gas engine, is suggested comprising an inlet air channel and a throttling element as described in the above. The inlet air channel may provide an air flow necessary for a combustible mixture, e.g. a gas mixture. The throttling element may be attached to an inner wall of the inlet air channel or be coupled with the inlet air channel by indirect means, such that the expansion member is arranged at least in part within the inlet air channel and is securely held.

Furthermore, a system for controlling an air flow in a combustion engine is suggested, comprising an inlet air channel, a valve, connectable to a pressurized gas source, and a throttling element as described in the above, wherein the throttling element is not self-expandable. The throttling element is arranged in the inlet air channel, wherein the expansion member is fluidly coupleable to the pressurized gas source via the valve. In other words, the amount of fluid within the inner portion of the expansion member may be directly adjusted by means of the pressurized gas and valve actuation. The valve may also be configured as a three-way valve, such that removal of the fluid may also be effected, wherein such removal may be performed passively or actively, e.g. by establishing an under pressure or suction pressure at the corresponding valve end.

Preferably, the system further comprises a control unit and at least one sensor unit communicatively coupled to said control unit, wherein the control unit is configured to control the valve based on a signal of the at least one sensor unit. The sensor unit is configured and/or arranged to detect a load and/or performance of the gas engine, a pressure downstream of the throttling element, or a pressure within the expansion member.

For example, the amount of fluid within the inner portion of the expansion member may correlate with particular load conditions or operating modes during operations of the combustion engine, e.g. based on provided characteristic curves, but may also be dependent on a signal from one or more sensors arranged downstream of or within the expansion member so as to adjust the radial extension based on measurements obtained in direct vicinity of or within the throttling element. For example, if a predefined under pressure is detected, it may be considered that the combustion engine is functioning under normal operation or the combustion engine requires less support from the throttling element to establish a necessary flow of the combustible fluid and radial extension of the expansion may hence accordingly be reduced.

The sensor unit may furthermore comprise multiple sensors, wherein said sensors may provide e.g. a feedback mechanism, a level of redundancy and/or additional operational measurements as an input for the control unit.

### Industrial Applicability

With reference to the Figures, a throttling element a combustion engine and a combustion engine equipped with such throttling element as well as a system for controlling an air flow in a combustion engine are suggested. The suggested throttling element as mentioned above is applicable in a variety of engines, such as gas engines, which require a controlled volume flow and high pressures. Further, the throttling element may replace conventional solid and heavy weight throttling valves and actuators as a replacement or retrofit part, which may be exchanged e.g. upon overhaul or prior to use.

## Claims

1. A throttling element for a combustion engine, comprising:
an expansion member (12) configured to increase its radial extension by increasing the amount of a fluid in an inner portion of the expansion member (12) and to decrease its radial extension by decreasing the amount of fluid from the inner portion,
wherein the expansion member (12) is configured to limit a cross-section of an air flow (22) of an inlet air channel (10) of the combustion engine by its radial extension in the assembled state of the throttling element.

2. The throttling element according to claim 1, wherein the expansion member (12) is configured to be fully arranged within the inlet air channel (10) in the assembled state of the throttling element.

3. The throttling element according to claim 1 or 2, comprising at least one support element (14) connected to and configured to support the expansion member (12), said support element (14) furthermore being connectable to an inner wall of the inlet air channel (10).

4. The throttling element according to claim 3, comprising at least two support elements (14), each of said support elements (14) furthermore being configured to contact the wall of the inlet air channel (10) at spaced-apart positions and/or wherein the contacting points of the support elements (14) are at equidistant circumferential spacing in a cross-section of the wall in the assembled state of the throttling element.

5. The throttling element according to any of the preceding claims, wherein the expansion member (12) is arranged at a central position of and/or concentric with the inlet air channel (14) in a cross-section of the inlet air channel (10) in the assembled state of the throttling element.

6. The throttling element according to any of the preceding claims, further comprising an expansion member guiding frame having at least two guiding members (20), each guiding member being coupled to the expansion member (12) and extending in a radial and axial direction from a coupling point (18) between the expansion member (12) and the guiding member (20).

7. The throttling element according to claim 6, wherein the guiding members (20) are arranged at equidistant circumferential spacing in a cross-section of the throttling element.

8. The throttling element according to claim 6 or 7, wherein at least two of the guiding members (20) define a parabolic shape or U-shape in a longitudinal section of the throttling element.

9. The throttling element according to any of claims 6 to 8, wherein the guiding members (20) are arranged to surround at least a portion of the expansion member (12) having the largest radial extension in a predefined expanded state of the expansion member (12), the guiding members (20) defining a predefined gap (24) between said portion of the expansion member (12) and the wall of the inlet air channel (10) in the assembled state of the throttling element.

10. The throttling element according to claim 9, wherein the expansion member (12) and the guiding members (20) are arranged and dimensioned such that the expansion member (12) closes the gap (24), if the expansion member (12) is expanded beyond the predefined expanded state.

11. The throttling element according to any of claims 6 to 10, wherein the guiding members (20) extend axially towards the inlet portion of the inlet air channel (10).

12. The throttling element according to any of the preceding claims, wherein the expansion member (12) is formed of an elastic material and/or wherein the fluid is a pressurized gas.

13. The throttling element according to any of the preceding claims, comprising a conduit (16) being in fluid communication with the expansion member (12) and configured for conducting a fluid to and from the expansion member (12) so as to define the amount of fluid in the inner portion of the expansion member (12), said conduit (16) preferably extending radially inward from the wall of the inlet air channel (10) in the assembled state of the throttling element and/or forming a support element (14) for the expansion member (12).

14. The throttling element according to any of claims 1 to 12, wherein the expansion member (12) comprises an air intake element (26) configured to receive a portion of the air flow (22), the expansion member (12) being configured so as to increase the amount of the fluid in the inner portion of the expansion member (12) via the air intake element (26), when the air flow (22) and/or a pressure acting on the expansion member (12) is below a predetermined threshold, and to decrease the amount of the fluid in the inner portion of the expansion member (12) via the air intake element (26), when the air flow (22) and/or the pressure acting on the expansion member (12) exceeds the predetermined threshold.

15. A combustion engine, preferably a gas engine, comprising an inlet air channel (10) and a throttling element according to any one of the preceding claims.

16. A system for controlling an air flow (22) in a combustion engine, comprising:
- an inlet air channel (10),
- a valve, connectable to a pressurized gas source, and
- a throttling element (12) according to any one of claims 1 to 13 and being arranged in the inlet air channel (10),
wherein the expansion member (12) is fluidly coupleable to the pressurized gas source via the valve.

17. The system according to claim 16, further comprising a control unit and at least one sensor unit communicatively coupled to said control unit, the control unit being configured to control the valve based on a signal of the at least one sensor unit, said sensor unit being configured and/or arranged to detect a load and/or performance of the gas engine, a pressure downstream of the throttling element, or a pressure within the expansion member.
